**Europäisches Patentamt**

**European Patent Office**

**Office européen des brevets**

(19)

(11) **EP 1 501 169 A2**

(12) **EUROPEAN PATENT APPLICATION**

(43) Date of publication:
**26.01.2005 Bulletin 2005/04**

(51) Int Cl.⁷: **H02K 1/22**

(21) Application number: **04076157.9**

(22) Date of filing: **15.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **22.04.2003 US 420348**

(71) Applicant: **Delphi Technologies, Inc.**
**Troy, MI 48007 (US)**

(72) Inventors:
 • **Krefta, Ronald J.**
  **Noblesville, IN 46060 (US)**

 • **Sriram, Tillasthanam V.**
  **Carmel, IN 46032 (US)**

(74) Representative: **Denton, Michael John et al**
 **Delphi European Headquarters,**
 **64 avenue de la Plaine de France,**
 **Paris Nord II,**
 **BP 60059,**
 **Tremblay-en-France**
 **95972 Roissy Charles de Gaulle Cédex (FR)**

(54) **Hybrid electrical machine with system and method for controlling such hybrid machine**

(57)   An electrical machine (10) having a hybrid rotor (11), i.e., both electrical and permanent magnet excitation, and system and method for controlling such hybrid machine are provided.

EP 1 501 169 A2

**Description**

FIELD OF THE INVENTION

The present invention is generally related to dynamoelectric machines, such as motors and generators, and, more particularly to electrical machines having hybrid rotors, i.e., both electrical and permanent magnet excitation, and system and method for controlling such hybrid machines.

BACKGROUND OF THE INVENTION

Presently, vehicular propulsion systems are generally configured with a starter for starting the engine, and a separate generator, for generating electric power to supply electrical loads onboard the vehicle, and recharge one or more batteries in the vehicle. While the vehicle is stopped, a significant amount of fuel may be used and pollutants are emitted into the environment. To alleviate this problem, vehicular propulsion architectures have been proposed which utilize a transmission-mounted electric machine to function both as starting motor and electric generator. When the vehicle is stopped, the engine would momentarily shut down and would be restarted when the driver removes his foot from the brake, thus increasing fuel economy and reducing the discharge of emissions into the environment.

Unfortunately, known transmission-mounted starter/generator systems have not provided a fully satisfactory solution since they tend to suffer from the drawbacks of high cost, large size, as well as generally requiring burdensome and costly vehicle redesign in the driveline to accommodate the addition of the electric machine. To overcome these drawbacks, it has been proposed to mount the starter-generator in locations commonly used for installing conventional stand-alone generators. Unfortunately, the amount of torque that can be obtained from such electric machines is not sufficient to crank large engines. That is, the torque production of known electric machines is inadequate to meet the cranking demands of large engines, considering that the machine has to meet the size and cost constraints of the propulsion system and be able to utilize uncomplicated, and low cost electronics.

Thus, it is desirable to overcome the foregoing issues by providing a high torque electric machine that utilizes relatively low cost and reliable power electronics. It is further desirable to provide an electric machine that integrates starting and generating functions to facilitate fuel savings in a vehicle, e.g., shutting the engine off during idling conditions. It is also desirable to be able to mount such a high torque electric machine without requiring any significant redesign in the driveline of the vehicle.

SUMMARY OF THE INVENTION

Generally, the present invention fulfills the foregoing needs by providing in one aspect thereof a hybrid electrical machine comprising a rotor having at least one field coil for generating a first magnetic flux component in response to current passing therethrough. The rotor in turn comprises first and second clawpole segments for encasing the field coil. The rotor further comprises at least one permanent magnet radially disposed at an end section thereof for creating a second magnetic flux component, wherein the permanent magnet is embedded within the end section of the rotor. A stator is configured to electromagnetically link the first and second flux components from said at least one field coil and the permanent magnet.

The present invention further fulfills the foregoing needs by providing in another aspect thereof a rotor for an electric machine. The rotor comprises at least one field coil for generating a first magnetic flux component in response to current passing therethrough. The rotor further comprises first and second clawpole segments for encasing the field coil. At least one permanent magnet is radially disposed at an end section of the rotor for creating a second magnetic flux component, wherein the permanent magnet comprises a plurality of permanent magnets embedded in cutouts provided at said end section of the rotor. In yet another aspect of the present invention, a method for controlling an electrical hybrid machine is provided. The method provides a plurality of control modes for operating the hybrid machine. At least one operational parameter indicative of an operational condition of the machine is sensed. An appropriate control mode is selected for the machine in response to the sensed operational parameter. A first set of gating pulses is generated for energizing at least one field coil. A second set of gating pulses is generated for energizing at least one stator phase, wherein at least one of the first and second sets of gating pulses is configured to perform the selected control mode for the machine.

In still another aspect of the present invention, a system for controlling an electrical hybrid machine is provided. The system comprises a machine controller configured to provide a plurality of control modes for operating the hybrid machine. The system further comprises means for sensing at least one operational parameter indicative of an operational condition of the machine. The machine controller is further configured to select an appropriate control mode for the machine in response to the sensed operational parameter. A field power bridge is configured to generate a first set of gating pulses for energizing the at least one field coil. A stator power bridge is configured to generate a second set of gating pulses for energizing the at least one stator phase, wherein at least one of the first and second sets of gating pulses is configured to perform the selected control mode for the machine.

BRIEF DESCRIPTION OF THE DRAWINGS

These and other advantages of the invention will be more apparent from the following description in view of the drawings that show:

FIG. 1 is a cutaway view of one exemplary embodiment of a hybrid electric machine according to aspects of the present invention and comprising a hybrid rotor whose magnetic field is established using both field coils and permanent magnets.

FIGS. 2 and 3 illustrate respective exemplary embodiments of rotor constructions in accordance with aspects of the present invention that allow embedding a plurality of permanent magnets in appropriately configured cutouts in the rotor.

FIG. 4 is a block diagram of an exemplary control system embodying aspects of the present invention for controlling a hybrid electric machine and more specifically comprising a stator power bridge for energizing the phases of the machine and a field power bridge for energizing a field coil of the machine.

FIG. 5 illustrates an exemplary embodiment of the stator power bridge of FIG. 4 comprising a plurality of upper and lower switching devices for powering the phases of the machine.

FIG. 6 illustrates an exemplary embodiment of the field power bridge of FIG. 4 comprising four switching devices connected to form an H-bridge circuit for powering the field coil.

FIG. 7 illustrates exemplary signal plots corresponding to a first cycle-conduction angle (e.g., 120°) for starting a hybrid machine in accordance with aspects of the present invention.

FIG. 8 illustrates exemplary signal plots corresponding to a second cycle-conduction angle (e.g., 180°) for operating the machine after reaching a predefined machine speed.

FIG. 9 illustrates an exemplary schematic of a subsystem including a processor embodying aspects of the present invention.

FIG. 10 illustrates exemplary machine speed/torque plots as a function of cycle-conduction angle.

DETAILED DESCRIPTION OF THE INVENTION

Aspects of the present invention are directed to increasing an electrical machine's output without a proportional increase in size and weight by using a permanent magnetic field to supplement an electrically-generated rotor field. In one exemplary embodiment, the machine comprises a hybrid Lundell-type electrical machine characterized by a rotor whose magnetic field is established using one or more field coils and one or more permanent magnets. For readers desirous of background information in connection with hybrid electric machines, reference is made to U.S. Pat. Nos. 6,437,477 titled "Hybrid Electrical Machine With Axial Flux Magnet," 6,455,978 titled "Hybrid Twin Coil Electrical Machine" and 6,538,358 titled "Hybrid Electrical Machine with Axially Extending Magnets," each of which is commonly owned by the same assignee of the present invention, Delphi Technologies, Inc., and is herein incorporated by reference.

As will be appreciated by those skilled in the art, a Lundell-type generator rotor includes a bobbin-wound field coil mounted on a rotor shaft to generate a magnetic field. The magnetic field flux may be transferred through two claw-type rotor segments forming the north and south poles, respectively, of the magnet thus-created. The magnetized rotor assembly spins inside a stator having a number of windings which are "cut" by the magnetized rotor's flux lines so as to induce an electrical current in the stator windings.

The output of a Lundell-type generator is a function of the rotor magnetization, among other parameters. Rotor magnetization is a function of the magnetic field strength in the rotor, which, in turn, is a function of the field coil excitation current. That is, by increasing the field coil excitation current, and thereby increasing the induced magnetic field strength in the claw segments, the rotor magnetization can be increased. However, the magnetization of the claw segments can be increased only up to a certain level, based on the size and material composition of the claw segments, beyond which the claw segments become magnetically saturated. Once the claw segments become saturated, their magnetization does not continue to increase with increased magnetic field strength. Therefore, as a practical matter, the maximum rotor magnetization in a conventional Lundell-type generator is a function of the rotor's size and, more particularly, the claw segments' size.

Permanent magnets can be used in lieu of a field coil to magnetize a generator rotor, and they can provide greater rotor magnetization than a field coil of comparable size. However, the output voltage of a generator using only a permanent magnet to establish rotor magnetization may not be easily controlled.

As elaborated in greater detail below, other aspects of the present invention are directed to control techniques for a hybrid electrical machine whose rotor magnetization is established using a combination of one or more electrically excitable field coils and one or more permanent magnets. The permanent magnet provides a base level of rotor magnetization. The rotor's magnetization can be increased above the base level of magnetization provided by the permanent magnet, subject to the limitations discussed above, by electrically exciting the field coil. Since a permanent magnet of a given size can produce a greater level of rotor magnetization than a field coil/claw segment assembly of the same size, a hybrid rotor according to aspects of the present invention can achieve a higher level of magnetization than a conventional rotor of the same size. Alternatively, a hybrid rotor according to aspects of the present invention having a predetermined level of magnetization can be smaller and lighter than a conventional Lundell-type rotor having the same level of magnetization.

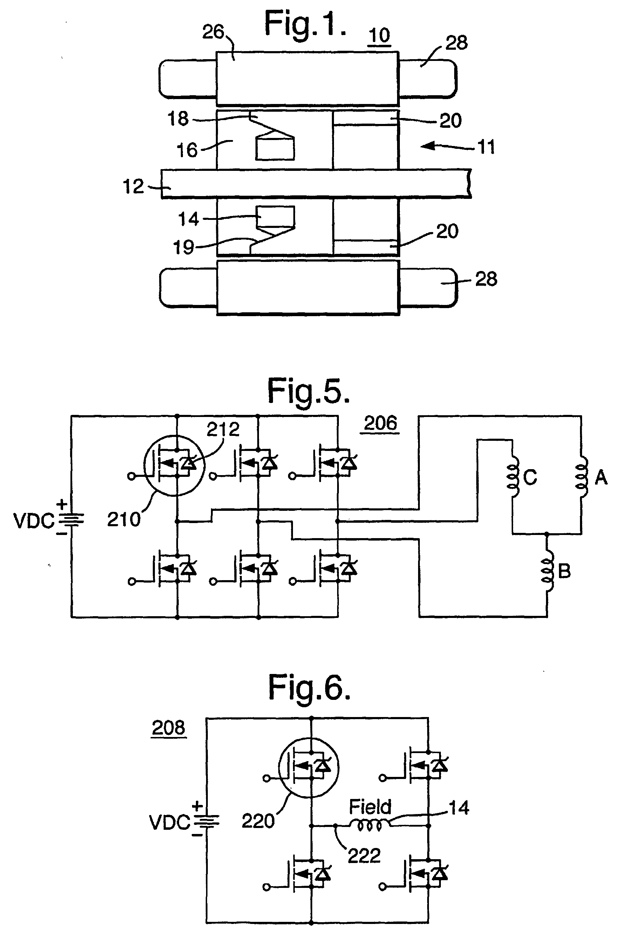

FIG. 1 is a cutaway view that illustrates one exemplary embodiment of a hybrid electric machine 10 according to aspects of the present invention. A hybrid rotor 11 comprises a shaft 12, a field coil 14, a first claw segment 16 and a second claw segment 18. Field coil 14 is located on shaft 12 between first and second claw segments 16 and 18. Each of first and second claw segments 16 and 18 includes a plurality of axially extending fingers, such as finger 19. For example, the fingers of first claw segment 16 are interleaved with the fingers of second claw segment 18 to substantially encase field coil 14. The machine further comprises a plurality of radially-arranged discrete permanent magnets 20 having a number of poles equal to twice the number of claw fingers 19 on claw segments 16 and 18.

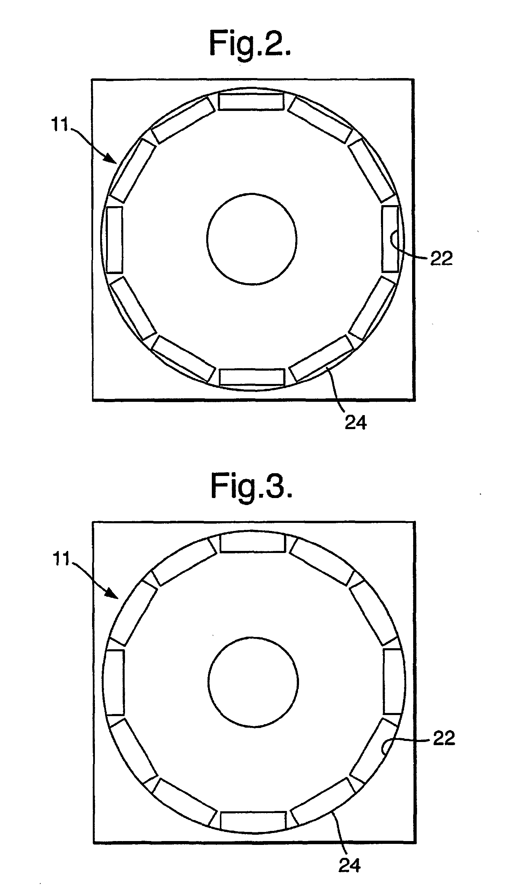

In one exemplary embodiment, the plurality of permanent magnets is radially embedded (e.g., buried) within appropriately configured cutouts 22 (FIGS. 2 and 3) constructed in a section of the rotor 11. In this exemplary embodiment, the rotor may comprise a plurality of laminations (e.g., lamination 24) pressed onto the rotor shaft. As shown in FIGS. 2 and 3, there would be appropriately configured openings cut in a number of stacked laminations so as to define each cutout 22 for receiving each magnet. In one exemplary embodiment, as illustrated in FIG. 2, the cutouts may be configured for holding rectangular-shaped magnets.

In another exemplary embodiment, as illustrated in FIG. 3, the cutouts may be configured for holding loaf-shaped magnets. It is believed that reluctance effects are more pronounced in the rectangular magnets and cutouts and accordingly such an embodiment would provide a relatively higher contribution of torque production due to such reluctance effects. This is because the reluctance difference, as seen from the stator phase conductors, between a low reluctance condition where the stator phase conductors are aligned with the center of the rotor magnet (e.g., the so-called quadrature axis) and a high reluctance condition when the stator phase conductors are aligned with the spacing or break between rotor magnets (e.g., the so-called direct axis) is generally greater in the configuration with the rectangular-shaped magnets than the loaf-shaped magnet. This technique of burying the magnets within the rotor provides a two-fold advantage. It provides a more reliable and structurally simple way for mechanically retaining the permanent magnets relative to the rotor and it provides the opportunity for additional shaft torque through the production of reluctance torque.

From a torque production point of view, the technique of burying the magnets within the rotor advantageously creates a series of flux paths that collectively enhance torque production. More specifically, one would not only get torque production due to flux from the permanent magnets as well as the Lundell coils, but this technique introduces reluctance effects that give rise to a reluctance torque component. The rotor section having embedded magnets would create a path of low reluctance followed by a path of high reluctance and each of such paths of high reluctance and low reluctance are successively repeated throughout the circumference of the rotor. When the stator is energized, the stator would try to pull the rotor around to align it with any path of low reluctance. Essentially, the rotor would be continuously pulled around and trying to catch up with a rotating flux vector from the stator. The end result is that due to the rotor construction comprising cutouts for embedding the magnets within the rotor, one introduces reluctance effects and advantageously obtains a reluctance torque contribution in addition to the torque contributions due to the hybrid characteristics of the machine. That is, torque contributions due to the permanent magnets and the field coil.

Thus, as discussed above, electric machine 10 comprises a clawpole wound rotor section, as a typical Lundell machine, and a permanent magnet rotor section wherein the permanent magnets are embedded within the machine. It will be appreciated that other techniques may be used for providing a permanent magnet in the machine. For example, the above-cited issued patents describe claw segments comprising an axially-extending shelf for supporting the discrete magnets, or use of a magnetized ring in lieu of discrete magnets.

As seen in FIG. 1, a stator 26 with respective stator coils 28 links the flux from both rotor sections, which may be aligned such that when positive current is flowing in the rotor field coil, the respective EMF contributions due to the permanent magnet and the field coil are substantially in phase with one another. The stator coils may be optionally wound either in a delta configuration or in a wye configuration depending on the requirements of any given application.

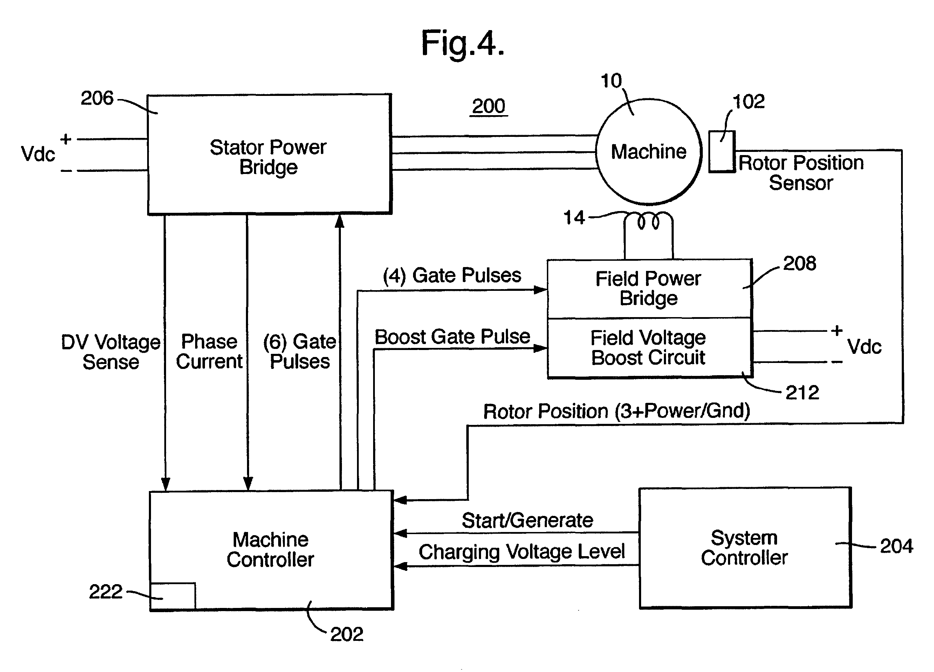

FIG. 4 is a block diagram of an exemplary control system 200 embodying aspects of the present invention for controlling hybrid machine 10. A machine controller 202 is coupled to receive commands from a system controller 204. For example, system controller 204 may provide a command signal indicative of whether a motoring mode or a power generating mode is desired for hybrid machine 10. In addition, system controller 204 may provide a command signal indicative of a charging voltage level for electrically charging a battery (not shown) onboard the vehicle.

Machine controller 202 is coupled to control operation of a stator power bridge 206 for energizing the phases of the machine 10 and further to control operation of a field power bridge 208 for energizing field coil 14.

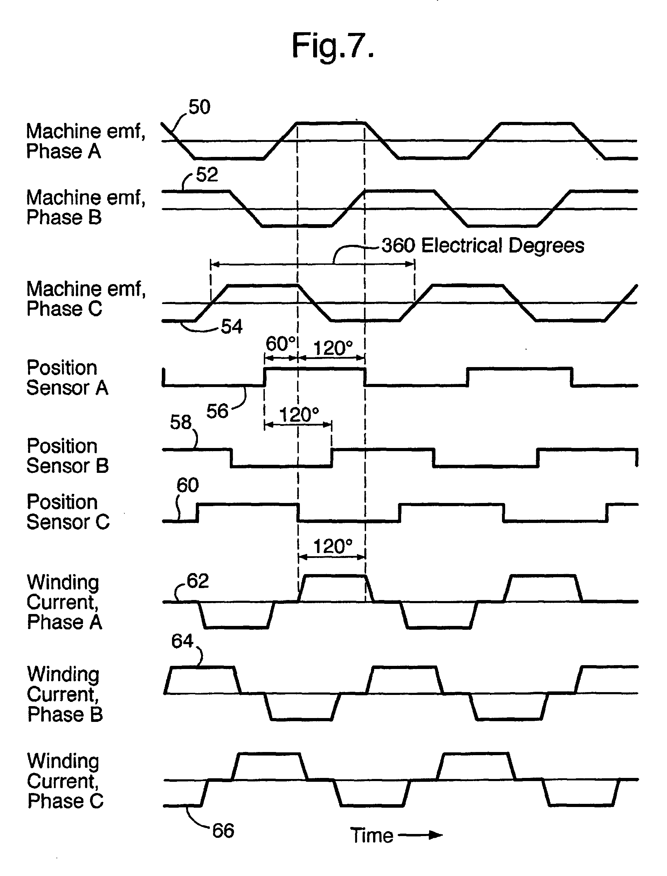

FIG. 5 illustrates an exemplary embodiment of stator power bridge 206 comprising a plurality of upper and lower switching devices 210. In one exemplary embodiment, the upper and lower switching devices comprise six switching devices, such as Metal Oxide Semiconductor Field Effect Transistors (MOSFETs), Insulated-Gate Bipolar Transistors (IGBTs), etc. As will be appreciated by those skilled in the art, for low voltage applications MOSFETs may be one preferred technology. The switching devices are connected in parallel with respective diodes 212 to energize the various phases of the machine (e.g., phases A, B and C), assuming a three-phase hybrid machine. Stator power bridge 206 operates as an inverter circuit in the motoring mode and as a rectifier circuit in the generating mode.

In one aspect of the present invention, control system 200 is configured to provide appropriate protection to the electric circuits therein in the presence of fault-inducing conditions, such as a load dump condition. This condition may occur, for instance, when an electrical load, such as the battery, is disconnected while current is flowing out of the windings of the machine. During such conditions, there may be a relatively high voltage spike present on the output of the generator because essentially there is a high level of inductance present in the machine windings that is trying to continue the current flow from the machine.

Stator power bridge 206 may be responsive to a set of gating pulses from machine controller 202 such that during a load-dump condition each of the upper (or each of the lower) power switching devices 210 are simultaneously and briefly turned on, thereby providing a discharge path to the machine that allows removing the relatively large voltage transient that usually arises during such load-dump condition without permitting the large voltage transient to propagate and cause potentially harmful effects to the electric circuits therein. The energization of the field coil during the load-dump condition, as controlled by field power bridge 208, may be programmed so that the polarity of the field voltage can be quickly reversed, thereby quickly reducing the magnitude of the field current in the field coil and reducing the severity of the load dump condition.

In the motoring mode of operation, the switching devices 210 of stator power bridge 206 may be controlled such that each machine phase is selectively energized for 120 degrees over an electrical half cycle or a full 180 degrees over the electrical half cycle. In the generating mode of operation, the switching devices 210 may be controlled using pulse-width modulation (PWM) techniques to boost the output voltage to a desired level or, if the machine line-to-line EMF exceeds the supply voltage, stator power bridge 206 may be operated in a synchronous rectification mode, as described below.

In the motoring mode, the diodes 212 act as freewheel diodes, whereas in the generating mode, they act as a rectifier bridge. In the event MOSFETs are employed in the stator power bridge 206, such MOSFETs could be energized during generation to conduct backwards. This is commonly referred to as synchronous rectification and generally increases the circuit efficiency with the FET body and diode conducting in parallel.

FIG. 6 illustrates an exemplary embodiment of field power bridge 208 comprising four switching devices 220 connected to form an H-bridge circuit for powering field coil 14. Bi-directional current flow may be provided to the field coil, using for example PWM techniques, to maintain appropriate voltage regulation during the generating mode. In one exemplary embodiment, field power bridge 208 may be programmed for setting magnet-induced flux linkage to range from approximately 0% to approximately 50% of the total machine flux linkage. For example, this would allow achieving full machine flux when positive field current is applied to field coil 14 or achieving zero machine flux when negative field current is applied to field coil 14.

In one exemplary embodiment, field power bridge 208 is responsive to a set of gating pulses from machine controller 202 to simultaneously turn on any two diagonally-opposite switching devices of the four switching devices 220 that make up the H-bridge circuit. This allows setting the flow of current through field coil 14 in either direction relative to a node 222, for example.

From an electromagnetic standpoint, this bi-directional control of current flow allows setting in the machine any single claw (or sets of claws) to a first polarity (e.g., north pole) or when commanding the current through the field coil in the opposite direction, this would set such claw (or sets of claws) to a second polarity (e. g., south pole). This control flexibility is important because the presence of the permanent magnets creates a permanent magnetic flux that is always on. That is, a flux that cannot be turned off. However, by selectively actuating any two diagonal switching devices of the H-bridge circuit, one can selectively add to that permanent flux with additional flux, provided the additional flux is substantially in phase with the permanent magnet flux. Conversely, if one turns on the other pair of diagonally opposite switching devices of the H-bridge circuit, this will substantially cancel the permanent magnet flux. This follows since this will create a flux that is out of phase by 180 degrees with the permanent magnet flux. This allows selectively driving the air gap flux down to zero and this is desirable for regulating the output voltage of the machine.

For example, let us assume a hybrid machine providing a flux of 1 unit due to the permanent magnet and further assume that one may control the H-bridge circuit, as discussed above, to obtain flux due to the field coil ranging from minus 1 to plus 1 unit, then one would have a machine with a total flux ranging from zero to 2 units of flux. Thus, in this example, one has the flexibility of obtaining twice the power output from the machine while having the ability to bring down to zero the air gap flux. This allows the capability of not generating any power if that is what is desired at a given speed. Moreover, during certain conditions prone to the creation of large transients, such as during a load dump, it is advantageous to have the ability to turn the flux off during such conditions.

Returning to FIG. 4, machine controller 202 comprises a memory 222 loaded with the appropriate logic for generating respective sets of gating pulses for setting the switching devices of stator power bridge 206 and field power bridge 208 to a desired switching state. Field power bridge 208 includes a field voltage boost circuit 212 responsive to a boost gate pulse from machine controller 202 to appropriately boost the voltage available to field coil 14 during low voltage starting conditions to achieve higher field current and higher output torque so as to be able to crank the vehicle even during low-voltage conditions. FIG. 4 further shows a rotor position sensor assembly 102 coupled to machine controller 202 to provide a signal indicative of the rotor position of the machine.

In accordance with aspects of the present invention, system 200 allows controlling an electrical hybrid machine 11 that may comprise at least one field coil 14 for generating a first magnetic flux component in response to current passing therethrough. The hybrid machine may further comprise a permanent magnet radially disposed at the rotor of the machine for creating a second magnetic flux component and at least one stator phase for linking the first and second flux components.

In one exemplary embodiment system 200 comprises a machine controller 202 configured to provide a plurality of control modes for operating the hybrid machine. System 200 further comprises means for sensing at least one operational parameter indicative of an operational condition of the machine. Example of the sensing means may be a rotor position or speed sensor; a voltage sensor for sensing changes in the load of the machine; a current sensor for sensing machine phase currents; a machine command sensor for sensing whether the machine has been commanded to a motoring mode or a power-generating mode, and any combination of the foregoing sensors. Machine controller 202 may be further configured to select an appropriate control mode for the machine in response to the sensed operational parameter. Field power bridge 204 may be configured to generate a first set of gating pulses for energizing field coil 14. Stator power bridge 206 may be configured to generate a second set of gating pulses for energizing the stator phase/s. At least one of the first and second sets of gating pulses is configured to perform the selected control mode for the machine.

In yet another aspects of the present invention, it has been recognized to provide hybrid machine control techniques that start the machine in a first mode of cycle-conduction (e.g., about 120 degrees) that enables the machine to overcome the frictional and compressive forces of the internal combustion engine coupled to the starter system. Upon the machine reaching a desired speed, one switches to a second mode of cycle-conduction (e.g., about 180 degrees) that improves the no-load speed performance of the machine.

FIG. 7 illustrates exemplary signal plots corresponding to a cycle-conduction angle of about 120 degrees. More particularly, FIG. 7 illustrates respective electromotive force (EMF) voltage signals for each phase of a three phase hybrid machine 10. In FIG. 7, the EMF voltage signals are respectively identified by the reference numerals 50, 52 and 54. FIG. 7 further illustrates signals 56, 58 and 60, such as may be generated by sensor assembly 102, each representative of a respective stream of pulses indicative of rotor position relative to each phase of the machine. In one exemplary embodiment, sensor assembly 102 comprises three sensors spaced 120 or 60 electrical degrees from one another. Examples of sensors that may be used for sensing rotor position include Hall-effect sensors, magneto-resistive sensors, encoders and optical sensors. As suggested above, it will be appreciated that the sensor assembly 102 is not limited to three sensors and the spatial positioning of the sensors is not limited to 120 or 60 electrical degrees since the techniques of the present invention can be utilized with polyphase machines having more or less than three phases.

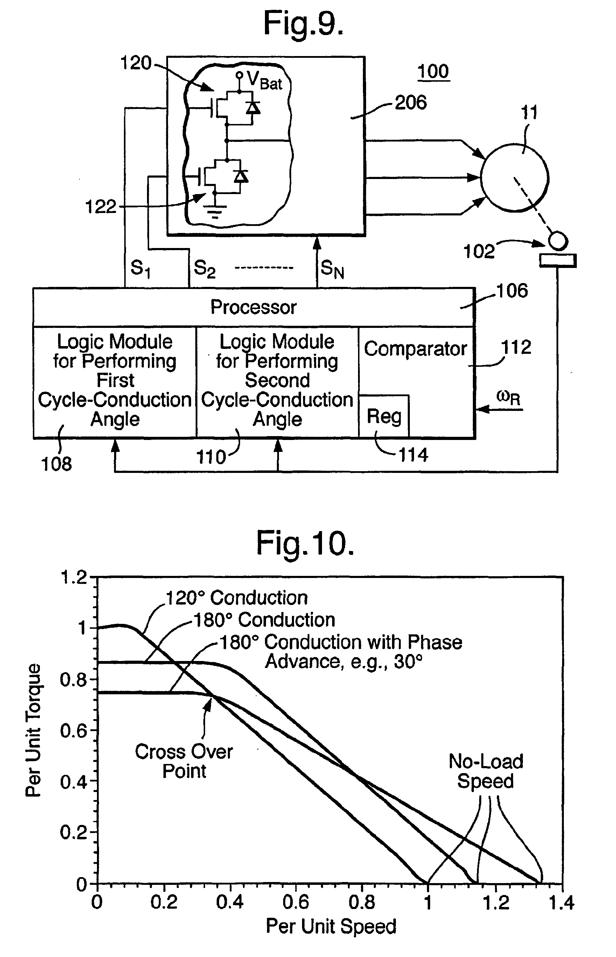

FIG. 7 further illustrates exemplary phase currents 62, 64 and 66 that are produced by the machine when energized by stator power bridge 206 in response to control signals corresponding to the signal sequence of FIG. 7. It will be appreciated that the generally trapezoidal current in each phase is non-zero for a total of about 240 electrical degrees per cycle, that is, 120 degrees for positive current, and 120 degrees for negative current. This mode of operation generally provides relatively high machine torque per ampere. Those skilled in the art will recognize that the timing of the energizing phase currents may be advanced by some electrical angle resulting in a greater machine torque, often refered to as phase advance or field weakening. The value of the phase angle to maximize torque production will vary as a function of speed. One may note in FIG. 7 that the trapezoidal currents are generated during the cycle portion where the EMF signals reach their respective peak levels, both positive and negative. Since the amount of torque produced by the machine is directly proportional to the product of EMF voltage and current, it will be intuitively appreciated from the phase and magnitude interrelationship of the exemplary voltage and current signals illustrated in FIG. 7 as to why the 120 degree conduction mode generally results in a relatively high torque/amp ratio. This can be also appreciated in the machine speed/torque plots illustrated in FIG. 10.

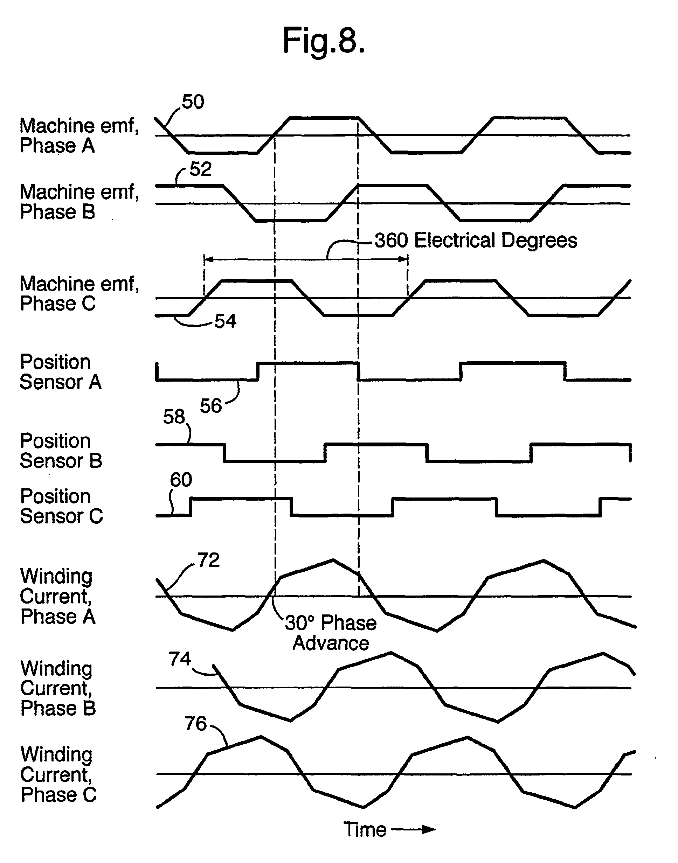

The gating or control signals can be derived with straightforward logic from the signals 56, 58 and 60. For example, in the exemplary embodiment shown in FIG. 7, the gating signals for the upper and lower switching devices in bridge 206, connected to generate the exemplary A-Phase current 62, would be derived from the A and C-Phase position sensors that supply the stream of pulses 56 and 60 respectively. More specifically, such logic could be represented in Boolean logic for the A-phase upper switching device 120 as $\overline{AC}$ for generating the positive portion of the A-phase current while the gating signals for the A-phase lower switching device 122 could be represented as $\overline{A}C$ for generating the negative portion of the A-Phase current. To put it another way, one can see in FIG. 7 that logic $A\overline{C}$ allows to mask the first 60 electrical degrees of the pulse stream from the phase A sensor while logic $\overline{A}C$ allows to mask the last 60 electrical degrees of the pulse stream from the phase C sensor. Similarly, the logic for generating the respective positive portions of the B and C-Phase currents could be represented as $\overline{A}B$ and $\overline{B}C$ respectively while the logic for generating the respective negative portions of the B and C-Phase currents could be represented as $A\overline{B}$ and $B\overline{C}$, respectively. It will be appreciated that the foregoing logic is merely illustrative being that other logical rules may be used to achieve a relative difference of about 60 electrical degrees between the cycle-conduction mode of FIG. 7 and the cycle-conduction mode discussed below in the context of FIG. 8.

FIG. 8 illustrates exemplary machine current signals 72, 74 and 76 corresponding to a cycle-conduction angle of about 180 degrees including an exemplary optional lead angle of 30 electrical degrees relative to the zero crossing of the EMF signals. This mode of operation generally results in more sinusoidal phase currents and better lends itself to phase advance. Machines driven with 180 degree excitation generally have a lower torque per amp ratio than those with 120 degree excitation, and consequently have a higher no-load speed. The logic for the inverter control signals for a given phase are generally directly related to the position sensor state corresponding to that phase for 180 degree conduction. For example, when the state of the A-Phase position sensor is high, the upper switching device for phase A is energized. Conversely, when the state of the A-Phase position sensor is low, the lower switching device for phase A is energized and the upper switching device would be deenergized. Similarly, when the state of the B-Phase position sensor is high, the upper switching device for phase B is energized and when the state of the B-Phase position sensor is low, the lower switching device for phase B is energized and the upper switching device would be deenergized. A similar logic would apply to the switching devices for phase C.

It will be appreciated in FIGS. 7 and 8 that the respective position sensor signals are set to trigger approximately 30 electrical degrees before the zero crossing of the corresponding phase EMF voltages. With the above-described logic for 120 degree conduction, each phase current is energized approximately 30 electrical degrees after the EMF zero crossing. By way of comparison, for 180 degree conduction, the position sensors would typically be set to trigger at the zero crossing of the phase EMF. Once again it will be appreciated that such arrangement is merely illustrative and should not be construed as a design constraint since the position sensors could be arranged to trigger at other angles relative to the zero-crossing or at the zero-crossings of the EMF voltage signals. As suggested above, the logical rules for combining the stream of pulses from the sensor assembly would be modified in straighforward manner to reflect any such arrangement. One may note in FIG. 8 that the phase advance or lead provided in the sinusoidal currents relative to the zero crossings of the EMF signals effectively reduces the net average value of the product of EMF voltage and current, as compared to the net average value of the product of EMF voltage and current, in the absence of any phase advance. The phase lead effectively introduces a current portion having a negative value and this reduces the net average value of the product of EMF voltage and current. Once again, since the amount of torque produced by the machine is directly proportional to the product of EMF voltage and current, it will be appreciated from the phase and magnitude interrelationship of the exemplary voltage and current signals illustrated in FIG. 8 as to why the 180 degree conduction mode with a phase advance generally results in a relatively lower torque/amp ratio and higher no-load speed as compared to both the 120 degree conduction and the 180 degree conduction without any lead. This can be also appreciated in the machine speed/torque plots illustrated in FIG. 10.

FIG. 9 illustrates an exemplary subsystem 100 for controlling a hybrid machine 11 to selectively run under at least two different conduction angles. For example, starting the machine in a first mode of cycle-conduction (e.g., about 120 degrees) and upon the machine reaching a desired speed, switching to a second mode of cycle-conduction (e.g., about 180 degrees) that improves the no-load speed performance of the machine.

As shown in FIG. 9, subsystem 100 includes sensor assembly 102 configured to supply a respective stream of pulses indicative of rotor position relative to each phase of the machine. A processor 106 is configured to process each stream of pulses from the sensor assembly 102 to generate a first set of control signals. Stator power bridge 206 is coupled to receive the first set of control signals and energize the respective phases of the stator to start the machine.

As discussed in the context of FIGS. 7 and 8, the first set of control signals is configured to provide a first cycle-conduction angle (e.g., about 120 electrical degrees) relative to the zero-crossings of the respective phase EMF voltages of the machine to produce a sufficiently high level of torque during start up of the machine. A first logic module 108 is configured to execute a first set of logical rules for selectively combining the stream of pulses from the sensor assembly 102 to provide the cycle-conduction angle based on the first set of control signals.

Upon the rotor reaching a predefined rotor speed value, such as may be determined by a comparator 112 by comparing a signal ($\omega_r$ indicative of rotor speed to the predefined rotor speed value, as may be stored in a memory device 114, the processor is configured to process each stream of pulses from the sensor assembly 102 to generate a second set of control signals. The rotor speed may be calculated by clocking the pulse width duration of the respective stream of pulses from sensor assembly 102, without having to add any separate speed sensor component. The second set of control signals is configured to provide a second cycle-conduction angle (e.g., 180 electrical degrees) relative to the zero-crossings of the respective phase EMF voltages of the machine to enable a sufficiently high rotor speed and thus facilitate the occurrence of a successful cranking event for the engine of the piece of equipment. A second logic module 110 is configured to execute a second set of logical rules for selectively combining the stream of pulses from the sensor assembly to provide the cycle-conduction angle based on the second set of control signals. In general, the cycle-conduction angle enabled by the second set of control signals exceeds the conduction angle enabled by the first set of control signals by a factor of $\frac{n}{n-1}$, wherein n is an integer number corresponding to the number of phases of the machine. That is, n is not allowed to be equal to one. For example, in the case of a three-phase machine, this factor is equal to 3/2 and assuming the second cycle-conduction angle is 180 degrees, the first cycle-conduction angle would correspond to 120 degrees. In the case of a five-phase machine, this factor is equal to 5/4 and assuming the second cycle-conduction angle is 180 degrees, the first cycle-conduction angle would correspond to 144 degrees. Similarly, in the case of a two-phase machine, this factor is equal to two and assuming the second cycle-conduction angle is 180 degrees, the first cycle-conduction angle would correspond to 90 degrees.

FIG 10 illustrates exemplary machine speed/torque plots as a function of cycle-conduction angle. As suggested above, the plot corresponding to 120 degree conduction has a higher torque per amp ratio than the plots corresponding to 180° degree conduction including some lead or advance angle (e.g., about 30 degrees) exhibit a higher no-load speed than both the plots corresponding to 120 degree conduction and 180 degree conduction with no phase advance. It will be appreciated, however, that the present invention is not limited to any specific phase advance value being that in some applications one may be able to quickly overcome the engine load torque thoughout the cranking speed range without having to provide any phase advance.

In operation, a hybrid electric machine embodying aspects of the present invention may be mounted onto a vehicular engine and used to start the engine as well as generate electric power to supply vehicle electric loads and recharge the battery of the vehicle. Such a machine may be connected to the engine through a belt with an appropriate belt ratio, e.g., approximately 3:1, with a belt-tensioning device to allow for both motoring and generating modes by the machine. It is believed that the hybrid machine and associated components, such as power circuits, may be configured to allow for fast starting of a warm engine to allow engine restarts in the range of approximately 300 ms. The engine restart may be performed subsequent to shutting off the engine during an idle vehicle condition.

While the preferred embodiments of the present invention have been shown and described herein, it will be obvious that such embodiments are provided by way of example only. Numerous variations, changes and substitutions will occur to those of skill in the art without departing from the invention herein. Accordingly, it is intended that the invention be limited only by the spirit and scope of the appended claims.

**Claims**

1. A hybrid electrical machine (10) comprising:

   a rotor (11) having at least one field coil (14) for generating a first magnetic flux component in response to current passing therethrough, the rotor comprising first and second clawpole segments (16 and 18) for encasing said at least one field coil, the rotor further comprising at least one permanent magnet (20) radially disposed at an end section thereof for creating a second magnetic flux component, wherein the permanent magnet is embedded within said end section of the rotor; and
   a stator (26) configured to electromagnetically link the first and second flux components from said at least one field coil and the permanent magnet.

2. The electric machine of claim 1 wherein the permanent magnet comprises a plurality of discrete permanent magnets embedded in cutouts (22) provided at said end section of the rotor.

3. The electric machine of claim 2 wherein the rotor comprises a plurality of stacked laminations (24), at least some of said laminations having respective openings aligned with one another for defining the cutouts for retaining the embedded permanent magnets at said end section of the rotor.

4. The electric machine of claim 2 wherein the plurality of permanent magnets embedded at said end section of the rotor form alternating regions of low and high reluctance along the circumference of the rotor proximate said end section of the rotor.

5. The electric machine of claim 2 wherein each cutout is configured as a rectangular-shaped cutout for receiving a similarly configured permanent magnet.

6. The electric machine of claim 2 wherein each cutout is configured as a loaf-shaped cutout for receiving a similarly configured permanent magnet.

7. The electric machine of claim 2 wherein the plurality of embedded permanent magnets is arranged so that any two adjacent magnets have opposite poles relative to one another.

8. A rotor (11) for an electric machine comprising:

at least one field coil (14) for generating a first magnetic flux component in response to current passing therethrough;

first and second clawpole segments (16 and 18) for encasing said at least one field coil; and

a permanent magnet (20) radially disposed at an end section of the rotor for creating a second magnetic flux component, wherein the permanent magnet comprises a plurality of permanent magnets embedded in cutouts (22) provided at said end section of the rotor.

9. The rotor of claim 8 wherein the rotor comprises a plurality of stacked laminations (24), at least some of said laminations having respective openings aligned with one another for defining the cutouts for retaining the embedded permanent magnets at said end section of the rotor.

10. The rotor of claim 8 wherein the plurality of permanent magnets embedded at said end section of the rotor form alternating regions of low and high reluctance along the circumference of the rotor proximate said end section of the rotor.

11. The rotor of claim 8 wherein each cutout is configured as a rectangular-shaped cutout for receiving a similarly configured permanent magnet.

12. The rotor of claim 8 wherein each cutout is configured as a loaf-shaped cutout for receiving a similarly configured permanent magnet.

13. The rotor of claim 8 wherein the plurality of embedded permanent magnets is arranged so that any two adjacent magnets have opposite poles relative to one another.

14. A method for controlling an electrical hybrid machine (10) comprising at least one field coil (14) for generating a first magnetic flux component in response to current passing therethrough and at least one permanent magnet (20) radially disposed at the rotor (11) of the machine for creating a second magnetic flux component, the machine further comprising at least one stator phase (26) for linking said first and second flux components, the method comprising:

providing a plurality of control modes for operating the hybrid machine;

sensing at least one operational parameter indicative of an operational condition of the machine;

selecting an appropriate control mode for the machine in response to the sensed operational parameter;

generating a first set of gating pulses for energizing the at least one field coil; and

generating a second set of gating pulses for energizing the at least one stator phase, wherein at least one of the first and second sets of gating pulses is configured to perform the selected control mode for the machine.

15. The control method of claim 14 wherein the second set of gating pulses is coupled to a plurality of switching devices (210) to energize the at least one stator phase to start the machine in a motoring mode of operation, the second set of gating pulses being configured to provide a first cycle-conduction angle relative to the zero-crossings of the respective phase EMF voltages of the machine to produce a sufficientlyhigh level of torque during start of the machine; and upon the rotor of the machine reaching a predefined rotor speed value, reconfiguring the second set of gating pulses to provide a second cycle-conduction angle relative to the zero-crossings of the respective phase EMF voltages of the machine to produce a sufficiently high rotor speed.

16. The control method of claim 15 wherein the cycle-conduction angle provided during start of the machine corresponds to about 120 degrees, and the cycle-conduction angle provided upon the rotor of the machine reaching the predefined rotor speed value corresponds to about 180 degrees.

17. The control method of claim 14 wherein the second set of gating pulses is configured to set a group of the switching devices coupled to energize the at least one stator phase to a respective conducting state to provide a discharge path to a voltage spike that may develop during a load dump condition.

18. The control method of claim 17 wherein the first set of gating pulses is configured to set selected pairs of a plurality of switching devices (220) coupled to energize the at least one field coil so that the polarity of voltage across said at least one field coil may be reversed, thereby reducing the magnitude of current flow through said at least one field coil and reducing the severity of the load dump condition.

19. The control method of claim 14 further comprising modulating selected pairs of a plurality of switching devices coupled to energize the at least one field coil so that current flow through said at least one field coil may be bi-directionally controllable, thereby regulating the magnitude of the voltage produced by the machine in a power generating mode.

20. The control method of claim 14 further comprising boosting the level of voltage available to said at least one field coil to achieve higher field current and higher output torque.

21. The control method of claim 14 further comprising operating the plurality of switching devices for energizing the at least one stator phase in a synchronous rectification mode, when the machine line-to-line EMF exceeds a supply voltage during a generating mode of operation.

22. The control method of claim 14 further comprising operating the plurality of switching devices for energizing the at least one stator phase in a voltage boost mode, when the supply voltage exceeds the machine line-to-line EMF.

23. The control method of claim 14 further comprising operating the plurality of switching devices for energizing the at least one stator phase in at least one of the following modes: a voltage boost mode, when the supply voltage exceeds the machine line-to-line EMF, and a synchronous rectification mode, when the machine line-to-line EMF exceeds a supply voltage during a generating mode of operation, wherein switching either from the synchronous rectification mode to the voltage boost mode or from the voltage boost mode to the synchronous rectification mode is automatically accomplished in response to an operational condition of the machine.

24. The control method of claim 23 wherein the operational condition of the machine comprises rotational speed of the machine.

25. The control method of claim 14 further comprising setting a level of magnet-induced flux linkage to range from about 0% to about 50% of the total machine flux linkage.

26. The control method of claim 25 wherein the setting of the level of magnet-induced flux linkage comprises modulating selected pairs of a plurality of switching devices coupled to energize the at least one field coil so that current flow through said at least one field coil may be bi-directionally controllable.

27. A system (200) for controlling an electrical hybrid machine (10) comprising at least one field coil (14) for generating a first magnetic flux component in response to current passing therethrough and at least one permanent magnet radially disposed at the rotor of the machine for creating a second magnetic flux component, the machine further comprising at least one stator phase for linking said first and second flux components, the system comprising:

a machine controller (202) configured to provide a plurality of control modes for operating the hybrid machine;
means for sensing (e.g., 102) at least one operational parameter indicative of an operational condition of the machine, the machine controller further configured to select an appropriate control mode for the machine in response to the sensed operational parameter;
a field power bridge (208) configured to generate a first set of gating pulses for energizing the at least one field coil; and
a stator power bridge (206) configured to generate a second set of gating pulses for energizing the at least one stator phase, wherein at least one of the first and second sets of gating pulses is configured to perform the selected control mode for the machine.

28. The control system of claim 27 wherein the second set of gating pulses is coupled to a plurality of switching devices (210) in the stator power bridge to start the machine in a motoring mode of operation, the second set of gating pulses being configured to provide a first cycle-conduction angle relative to the zero-crossings of the respective phase EMF voltages of the machine to produce a sufficiently high level of torque during start of the machine; and
upon the rotor of the machine reaching a predefined rotor speed value, reconfiguring the second set of gating pulses to provide a second cycle-conduction angle relative to the zero-crossings of the respective phase EMF voltages of the machine to produce a sufficiently high rotor speed.

29. The control system of claim 28 wherein the cycle-conduction angle provided during start of the machine corresponds to about 120 degrees, and the cycle-conduction angle provided upon the rotor of the machine reaching the predefined rotor speed value corresponds to about 180 degrees.

30. The control system of claim 27 wherein the second set of gating pulses is configured to set a group of switching devices in the stator power bridge to a respective conducting state to provide a discharge path to a voltage spike that may develop during a load dump condition.

31. The control system of claim 30 wherein the first set of gating pulses is configured to set selected pairs of a plurality of switching devices (220) in the field power bridge so that the polarity of voltage across said at least one field coil (e.g., 14) may be reversed, thereby reducing the magnitude of current flow through said at least one field coil and reducing the severity of the load dump condition.

32. The control system of claim 31 wherein the plurality of switching devices in the field power bridge is arranged to form an H-bridge circuit, and the selected pairs of switching devices comprise diagonally-opposite switching devices of the H-bridge circuit.

33. The control system of claim 27 wherein the machine controller is configured to modulate selected pairs of a plurality of switching devices (220) in the field power bridge so that current flow through said at least one field coil may be bi-directionally controllable, thereby regulating the magnitude of the voltage produced by the machine in a power generating mode.

34. The control system of claim 27 further comprising a boost circuit (212) configured to boost the level of voltage available to said at least one field coil to achieve higher field current and higher output torque.

35. The control system of claim 27 wherein the machine controller is configured to operate the plurality of switching devices in the stator power bridge in a synchronous rectification mode, when the machine line-to-line EMF exceeds a supply voltage during a generating mode.

36. The control system of claim 27 wherein the machine controller is configured to operate the plurality of switching devices in the stator power bridge in a voltage boost mode, when the supply voltage exceeds the machine line-to-line EMF.

37. The control system of claim 27 wherein the machine controller is configured to operate the plurality of switching devices in the stator power bridge in at least one of the following modes: a synchronous rectification mode, when the machine line-to-line EMF exceeds a supply voltage during a generating mode, and a voltage boost mode, when the supply voltage exceeds the machine line-to-line EMF, and further wherein the machine controller is responsive to a signal indicative of machine speed for automatically switching either from the synchronous rectification mode to the voltage boost mode or from the voltage boost mode to the synchronous rectification mode as the machine speed crosses a predefined mode switching point.

38. The control system of claim 27 wherein the machine controller is further configured to set a level of magnet-induced flux linkage to range from about 0% to about 50% of the total machine flux linkage by modulating selected pairs of a plurality of switching devices in the field power bridge so that current flow through said at least one field coil may be bi-directionally controllable.

# Fig.1. 10

26   28
18   20
16   11
12
14
19   20
28

# Fig.5. 206

VDC

212
210

C   A

B

# Fig.6.

208

VDC

220

Field   14
222

# Fig.2.

# Fig.3.

Fig.4.

# Fig.7.

Machine emf, Phase A  50

Machine emf, Phase B  52

360 Electrical Degrees

Machine emf, Phase C  54

60°  120°

Position Sensor A  56

58  120°

Position Sensor B

Position Sensor C  60

120°

Winding Current, Phase A  62

Winding Current, Phase B  64

Winding Current, Phase C  66

Time ⟶

# Fig.8.

Machine emf, Phase A — 50

Machine emf, Phase B — 52

Machine emf, Phase C — 54

360 Electrical Degrees

Position Sensor A — 56

Position Sensor B — 58

Position Sensor C — 60

Winding Current, Phase A — 72

30° Phase Advance

Winding Current, Phase B — 74

Winding Current, Phase C — 76

Time ⟶

# Fig.9.

# Fig.10.